# EUROPEAN PATENT APPLICATION

(11) **EP 2 130 751 A1**
(43) Date of publication of application: **09.12.2009**
(21) Application number: 08722737.7
(22) Date of filing: 24.03.2008
(51) Int. Cl.: B62J 9/00, B62J 1/12, B62J 35/00, B62K 11/00, B62K 11/04, B62M 7/02

(54) **STRADDLE RIDING TYPE VEHICLE**

(30) Priority: 30.03.2007 JP 2007094983
(71) Applicant: Yamaha Hatsudoki Kabushiki Kaisha, Iwata-shi, Shizuoka 438-8501 (JP)
(72) Inventor: OHIRA, Masaru, Shizuoka-ken 438-8501 (JP)
(74) Representative: Grünecker, Kinkeldey, Stockmair & Schwanhäusser Anwaltssozietät
(86) International application number: PCT/JP2008/055471
(87) International publication number: WO 2008/123204

(57) **Abstract**

Amotorcycle 10 includes: a seat 50 on which a rider sits; a helmet storage unit 80 which accommodates a helmet HL; a body frame 30 having a steering head pipe 31; a rear wheel 90; an engine 40 which generates driving force to be transmitted to the rear wheel 90 and is attached to the body frame 30; and a fuel tank 60 which stores fuel to be supplied to the engine 40. The seat 50 constituting the motorcycle 10 is disposed between the steering head pipe 31 and the rider. The helmet storage unit 80 and the fuel tank 60 are disposed below the seat 50.

## Description

### TECHNICAL FIELD

The present invention relates to a straddle-type vehicle including a body frame, an engine fixed to the body frame, a seat on which a rider sits, and an article storage unit which accommodates an article.

### BACKGROUND ART

For a straddle-type vehicle which requires a rider to take a posture of straddling on a saddle such as a motorcycle, various layouts which aim at efficient disposition of included components have been proposed. According to a layout example of a known straddle-type vehicle, a helmet storage unit for accommodating a helmet is disposed before a seat on which riders (rider and tandem-rider) sit, and a fuel tank for storing fuel to be supplied to an engine is disposed below the seat (for example, see Patent Reference 1).
[Patent Reference 1] Japanese Patent No. 2,868,787 (pp. 3-4, Fig. 1)

### DISCLOSURE OF THE INVENTION

According to the related-art straddle-type vehicle discussed above, the article storage unit such as helmet storage unit is disposed before the seat on which the riders sit. Thus, the legs (particularly knees) of the riders sitting on the seat easily contact the wide article storage unit. Particularly for the straddle-type vehicle which fixes the engine to the body frame below the seat, it is difficult to include such an article storage unit capable of preventing contact with the legs of the riders sitting on the seat while securing rigidity of the vehicle body.

The invention has been developed to solve these problems. It is an object of the invention to provide a straddle-type vehicle which includes such an article storage unit capable of preventing contact with legs of a rider sitting on the seat while securing rigidity of the vehicle body.

In order to achieve this object, a straddle-type vehicle provided according to the invention has the following characteristics. A straddle-type vehicle (motorcycle 10, for example) according to according to a first aspect of the invention includes: a body frame (body frame 30); an engine (engine 40) which generates driving force to be transmitted to a wheel (rear wheel 90) and is attached to the body frame; a seat (seat 50) on which a rider sits; and an article storage unit (helmet storage unit 80) which accommodates an article. The body frame is disposed between the engine and the seat in the side view of the straddle-type vehicle. At least a part of the article storage unit is disposed between the engine and the seat in the side view of the straddle-type vehicle.

According to this straddle-type vehicle, at least a part of the article storage unit is disposed between the engine and the seat. In this case, the legs of the rider sitting on the seat do not easily contact the article storage unit for accommodating a helmet or the like. Thus, the maneuverability of the straddle-type vehicle and the comfortableness around the knees of the rider riding on the straddle-type vehicle improve even in the structure having the article storage unit for accommodating a helmet or the like.

According to this structure, the body frame is positioned between the engine and the seat. Thus, the rigidity of the vehicle body can be secured even in the structure disposing the large article storage unit sufficient for accommodating a helmet or the like between the engine and the seat.

According to a straddle-type vehicle in a second aspect of the invention, a fuel tank (fuel tank 60) which stores fuel to be supplied to the engine is further provided, the seat extends in the front-rear direction of the straddle-type vehicle, and the article storage unit and the fuel tank are disposed between the front end (front end 50fe) of the seat and the rear end (rear end 50re) of the seat in the side view of the straddle-type vehicle in the structure of the first aspect of the invention.

According to a straddle-type vehicle in a third aspect of the invention, the seat has a slope inclined toward the rear of the straddle-type vehicle, the article storage unit is disposed below the slope, and the fuel tank is disposed behind the article storage unit in the structure of the second aspect of the invention.

According to a straddle-type vehicle in a fourth aspect of the invention, the fuel tank has an oil supply port unit (fuel cap 61V) through which the fuel is supplied, and a sub tank (sub tank 62) having a smaller capacity than that of the fuel tank, and the oil supply port unit is provided on the sub tank in the structure of the third aspect of the invention.

According to a straddle-type vehicle in a fifth aspect of the invention, the oil supply port unit is provided before the article storage unit in the structure of the fourth aspect of the invention.

According to a straddle-type vehicle in a sixth aspect of the invention, the body frame is disposed at a position shifted toward the outside from the center line (center line CL) of the straddle-type vehicle in the vehicle width direction, and the article storage unit extends toward the side of the body frame in the area opposite to the area where the body frame is disposed with respect to the center line in the structure of the first aspect of the invention.

According to a straddle-type vehicle in a seventh aspect of the invention, the body frame has an upper sub frame (upper sub frame 30d) extending in the front-rear direction of the straddle-type vehicle, and a lower sub frame disposed below the upper sub frame and extending in the front-rear direction of the straddle-type vehicle, and the upper sub frame is disposed between the engine and the seat in the side view for the straddle-type vehicle in the structure of the first aspect of the invention.

According to a straddle-type vehicle in an eighth aspect of the invention, the article storage unit has a space sufficient for accommodating at least a helmet of a rider in the structure of the first aspect of the invention.

The straddle-type vehicle provided according to the characteristics of the invention can prevent contact between the article storage unit and the legs of the rider sitting on the seat while securing sufficient rigidity of the vehicle body.

### BRIEF DESCRIPTION OF THE DRAWINGS

[Fig. 1] Fig. 1 is a left side view of a straddle-type vehicle according to an embodiment of the invention.
[Fig. 2] Fig. 2 is a cross-sectional view of the straddle-type vehicle taken along a line F1-F1 shown in Fig. 1.
[Fig. 3] Fig. 3 is a left side view of a straddle-type vehicle according to a modified example of the invention.

### BEST MODE FOR CARRYING OUT THE INVENTION

A straddle-type vehicle according to an embodiment of the invention is hereinafter described with reference to the drawings. In these figures, identical or similar numbers are given to identical or similar parts. It should be noted that the figures are only schematic ones where the proportions and the like for the respective sizes do not correspond to the actual ones.

It is therefore intended that specific sizes and the like are determined based on the teachings shown herein. Obviously, some parts shown in one figure have different size relations and proportions from those shown in other figures.

### (Structure of Straddle-type Vehicle)

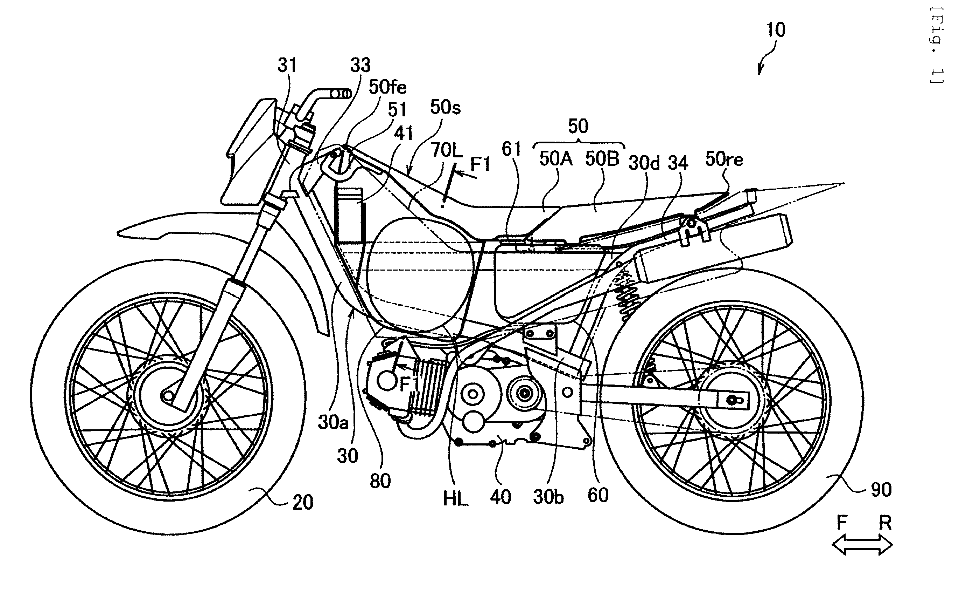

Fig. 1 is a left side view illustrating a motorcycle 10 as the straddle-type vehicle according to this embodiment. The motorcycle 10 is characterized by including a seat 50 which extends in the front-rear direction of the motorcycle 10 and by disposing a helmet storage unit 80 and a fuel tank 60 below the seat 50. In this embodiment, the helmet storage unit 80 constitutes an article storage unit.

As illustrated in Fig. 1, the motorcycle 10 has a front wheel 20 and a rear wheel 90, and the rear wheel 90 is driven by driving force generated by an engine 40.

The motorcycle 10 has a body frame 30. The body frame 30 constitutes a framework of the motorcycle 10. The body frame 30 has a front frame 30a, a rear frame 30b, and an upper sub frame 30d.

The body frame 30 is disposed between the engine 40 and the seat 50 in the side view of the motorcycle 10.

At least a part of the helmet storage unit 80 is disposed between the engine 40 and the seat 50 in the side view of the motorcycle 10.

In this embodiment, the front frame 30a and the rear frame 30b constitute a lower sub frame. The lower sub frame is positioned below the upper sub frame 30d, and extends in the front-rear direction of the motorcycle 10.

The front frame 30a extends in the downward direction of the motorcycle 10 from a steering head pipe 31 which supports a steering shaft (not shown) such that the steering shaft can rotate. The rear frame 30b extends from the front frame 30a toward the rear wheel 90. The upper sub frame 30d is disposed above the front frame 30a and the rear frame 30b, and extends in the front-rear direction of the motorcycle 10 substantially in the horizontal direction. The upper sub frame 30d is disposed between the engine 40 and the seat 50 in the side view of the motorcycle 10. A rear sub frame 34 is joined to the body frame 30.

The rear sub frame 34 extends upward to the rear from the rear frame 30b, more specifically, toward a rear end 50re of the seat 50. The front end of the upper sub frame 30d is joined to the body frame 30, and the rear end of the upper sub frame 30d is joined to the rear sub frame 34.

The motorcycle 10 has the seat 50 on which riders (rider and tandem-rider) sit. The seat 50 extends in the front-rear direction of the motorcycle 10. The riders sitting on the seat 50 take a posture of straddling on a saddle.

In this embodiment, the seat 50 has a front seat 50A and a rear seat 50B. The front seat 50A is disposed above the helmet storage unit 80. The front seat 50A is positioned between the steering head pipe 31 and the rider sitting on the front seat 50A (or rear seat 50B). In this embodiment, the front seat 50A is a body constituent element of the motorcycle 10. It is possible to provide other body constituent element (such as body cover) between the steering head pipe 31 and the rider sitting on the seat 50 in place of the front seat 50A.

A stay 51 is provided at a front end 50fe of the front seat 50A. The stay 51 is rotatably supported by a bracket 33 connected to the body frame 30. More specifically, the front seat 50A is opened and closed by rotation around a shaft (not shown) inserted through the bracket 33 and the stay 51 in the vehicle width direction. The front seat 50A has a slope 50s inclined downward to the rear of the motorcycle 10. The rear seat 50B is disposed behind the front seat 50A, and is located above the fuel tank 60. The upper portion of a fuel cap 61 provided on the upper surface of the front region of the fuel tank 60 is covered by the front seat 50A.

The engine 40 is disposed below the seat 50 having the front seat 50A and the rear seat 50B. In addition, the engine 40 is located below the body frame 30, more specifically, below the rear frame 30b. The engine 40 is attached to the rear frame 30b.

The fuel tank 60 and the helmet storage unit 80 are disposed between the engine 40 and the seat 50. The helmet storage unit 80 is disposed below the slope 50s.

The fuel tank 60 stores fuel to be supplied to the engine 40. The fuel tank 60 has the fuel cap 61 detachably attached to an oil supply port (not shown) through which fuel is supplied. The fuel tank 60 is disposed behind the helmet storage unit 80.

The helmet storage unit 80 accommodates a helmet HL. In this embodiment, the helmet HL is an open face type (jet type) helmet.

A battery 41 is positioned in the front region of the helmet storage unit 80. Thus, the helmet storage unit 80 has a space for accommodating the helmet HL and the battery 41.

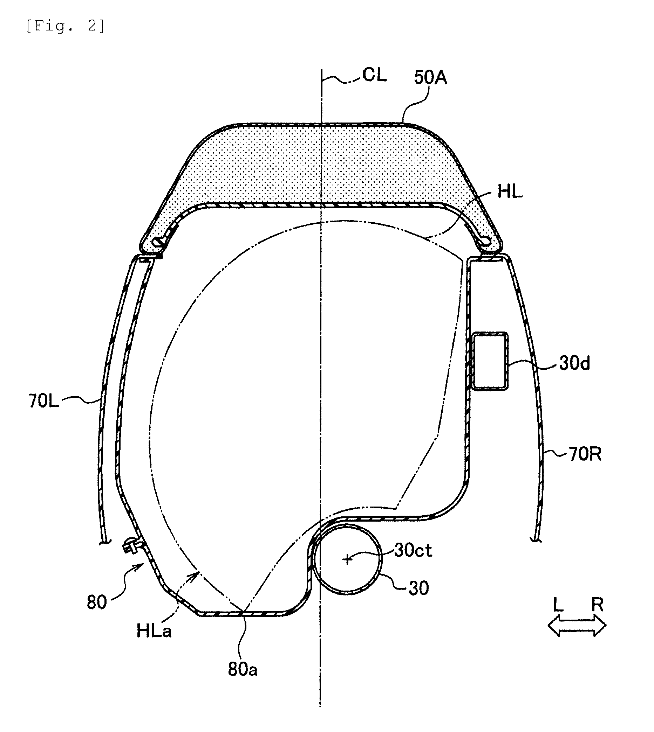

The left side of the helmet storage unit 80 is covered by a body cover 70L. Similarly, the right side of the helmet storage unit 80 is covered by a body cover 70R (now shown in Fig. 1, see Fig. 2).

The helmet storage unit 80 and the fuel tank 60 are disposed between the front end 50fe and the rear end 50re of the seat 50 in the side view of the motorcycle 10. In addition, the helmet storage unit 80 and the fuel tank 60 are disposed above the body frame 30.

### (Cross-sectional Shape of Helmet Storage Unit)

Fig. 2 is a cross-sectional view of the motorcycle 10 taken along a line F1-F1 in Fig. 1. As illustrated in Fig. 2, the upper area of the helmet storage unit 80 is covered by the front seat 50A. More specifically, the helmet storage unit 80 is a box-shaped, and the upper portion (not shown) of the helmet storage unit 80 is an open surface (not shown). The front seat 50A covers this open surface.

The left side of the helmet storage unit 80 is covered by the vehicle cover 70L. The right side of the helmet storage unit 80 is covered by the vehicle cover 70R. The upper sub frame 30d is disposed between the helmet storage unit 80 and the vehicle cover 70R.

The body frame 30 is disposed at a position shifted toward the outside from a center line CL in the vehicle width direction. More specifically, a central portion 30ct of the body frame 30 in the vehicle width direction is disposed at a position shifted toward the outside from the center line CL in the vehicle width direction, that is, to the right from the center line CL in this embodiment. The center line CL is a line passing the center of the motorcycle 10 in the vehicle width direction (L-R direction in the figure).

The helmet storage unit 80 is disposed above the front frame 30a and the rear frame 30b constituting the lower sub frame. In addition, the helmet storage unit 80 extends toward the sides of the front and rear frames 30a and 30b in the area (left side) opposite to the area (right side) where the body frame 30 (more specifically, the upper sub frame 30d) is disposed with respect to the center line CL. More specifically, the helmet storage unit 80 has a bottom portion 80a positioned on the sides of the front and rear frames 30a and 30b in the left area with respect to the center line CL.

The helmet storage unit 80 accommodates the open face type (jet type) helmet HL. The helmet HL is contained in the helmet storage unit 80 in such a condition that a front area HLa is positioned on the bottom portion 80a.

### (Operation and Advantage)

According to the motorcycle 10, at least a part of the helmet storage unit 80 is disposed between the engine 40 and the seat 50. Thus, the legs (particularly knees) of the riders sitting on the seat 50 do not easily contact the helmet storage unit 80. According to the motorcycle 10, therefore, the maneuverability of the motorcycle 10 and the comfortableness around the knees of the riders riding on the motorcycle 10 can be improved even in the structure having the helmet storage unit 80.

The body frame 30 is disposed between the engine 40 and the seat 50. Thus, rigidity of the vehicle body can be secured even in the structure disposing the large-sized helmet storage unit 80 sufficient for accommodating a helmet between the engine 40 and the seat 50.

According to this embodiment, the helmet storage unit 80 and the fuel tank 60 are disposed between the front end 50fe and the rear end 50re of the seat 50 in the side view of the motorcycle 10. Thus, the legs of the riders sitting at any positions between the front and rear ends 50fe and 50re of the seat 50 do not easily contact the helmet storage unit 80 and the fuel tank 60.

According to this embodiment, the helmet storage unit 80 is disposed between the seat 50 and the engine 40. That is, the helmet storage unit 80 is located immediately below the seat 50. Thus, the helmet storage unit 80 can be disposed at such a level where the helmet HL can be easily put into and taken out of the helmet storage unit 80.

According to this embodiment, the fuel tank 60 is disposed behind the helmet storage unit 80. More specifically, the helmet storage unit 80 is positioned below the slope 50s of the front seat 50A inclined downward toward the rear. The fuel tank 60 is disposed below the rear seat 50B and the part of the front seat 50A other than the slope 50s. The helmet storage unit 80 extends toward the side of the body frame 30 in the left area opposite to the right area where the body frame 30 is disposed with respect to the center line CL.

Thus, the helmet storage unit 80 having a certain height sufficient for accommodating the helmet HL can be disposed below the seat 50 with the height of the seat 50 kept short. Moreover, the vehicle body width of the motorcycle 10 can be decreased to have a thin body even in the structure having the helmet storage unit 80.

According to this embodiment, the helmet storage unit 80 and the fuel tank 60 are disposed above the body frame 30, and the engine 40 is disposed below the body frame 30. Thus, the space for disposing the helmet storage unit 80, the fuel tank 60, and the engine 40 can be securely produced while necessary rigidity of the motorcycle 10 is provided by the body frame 30.

Furthermore, the upper sub frame 30d extending in the front-rear direction of the motorcycle 10 is disposed above the body frame 30, and the rear end of the upper sub frame 30d is joined to the rear sub frame 34. Thus, the rigidity of the motorcycle 10 can be further increased.

### (Modified Example)

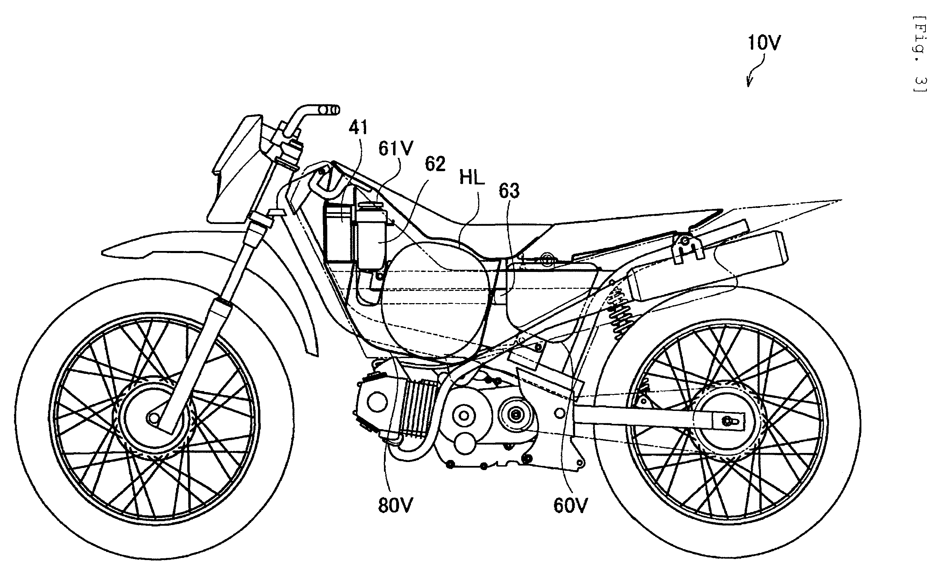

Fig. 3 is a left side view of a motorcycle 10V according to a modified example of the motorcycle 10 discussed above. Different structures in this example from those of the motorcycle 10 are now chiefly described.

As illustrated in Fig. 3, the motorcycle 10V includes a fuel tank and a helmet storage unit having shapes different from those of the motorcycle 10.

More specifically, a fuel tank 60V has a sub tank 62. The capacity of the sub tank 62 is smaller than that of the fuel tank 60V. The capacity (size) of the fuel tank 60V alone is smaller than that of the fuel tank 60 included in the motorcycle 10. The total capacity of the fuel tank 60V and the sub tank 62 is approximately the same as that of the fuel tank 60 provided on the motorcycle 10.

The sub tank 62 has a fuel cap 61V. The fuel cap 61V is detachably attached to an oil supply port (not shown) formed on the sub tank 62 (in this embodiment, an oil supply port unit is constituted by the fuel cap 61V and the oil supply port).

The fuel cap 61V and the sub tank 62 are disposed before a helmet storage unit 80V. The fuel tank 60V and the sub tank 62 are connected by a fuel hose 63 through which fuel is supplied.

The helmet storage unit 80V expands toward the rear of the motorcycle 10V in accordance with the size decrease of the fuel tank 60V in comparison with the helmet storage unit 80 included in the motorcycle 10.

The sub tank 62 is disposed in the front area of the helmet storage unit 80V. The helmet HL is accommodated behind the sub tank 62. The battery 41 is provided before the sub tank 62.

According to the motorcycle 10V, the sub tank 62 having the oil supply port to which the fuel cap 61V is detachably attached is provided in the front area of the helmet storage unit 80V. That is, the sub tank 62 having the oil supply port can be disposed at a position different from the position of the fuel tank 60V. Thus, a certain degree of freedom in design of the motorcycle 10V can be secured. For example, the position of the sub tank 62 can be easily varied according to the environment (such as district of use) where the motorcycle 10V is used.

### (Other Example)

While several examples embodying the invention have been described for disclosing the invention, it should be noted that the description and depiction constituting a part of this disclosure do not limit the scope of the invention. It is therefore understood that various alternative examples will be obvious for those skilled in the art from the teachings contained in the disclosure.

For example, it is possible to employ a unit swing type engine unit supported by the body frame such that the engine unit can swing in lieu of the engine 40 attached to the body frame 30 included in the structure of the motorcycle 10 (motorcycle 10V) according to this embodiment.

According to the motorcycle 10 (motorcycle 10V) in this embodiment, the upper sub frame 30d is disposed between the engine 40 and the seat 50 in the side view of the motorcycle 10. Also, the front frame 30a and the rear frame 30b constituting the lower sub frame and positioned below the upper sub frame 30d is disposed between the engine 40 and the seat 50 in the motorcycle 10. However, the front frame 30a and the rear frame 30b may be disposed below the engine 40.

According to the motorcycle 10 in this embodiment, the helmet storage unit 80 is provided as the article storage unit. However, the article storage unit may accommodate articles such as tools carried on the vehicle and baggage of the rider other than a helmet.

Accordingly, it is apparent that the invention includes various examples and the like not specifically described herein. The technical scope of the invention is thus defined only by the specific matters of the invention as appropriately claimed in the appended claims based on the description herein.

The entire contents of Japanese Patent Application No. 2007-094983 (filed on March 30, 2007) are incorporated in this description by reference.

### INDUSTRIAL APPLICABILITY

As described above, the straddle-type vehicle according to the invention improves maneuverability and comfortableness around the knees of the rider even in the structure including the helmet storage unit and the fuel tank. Thus, the technology of the invention is appropriately used for the straddle-type vehicle which requires straddling posture of the rider.

## Claims

1. A straddle-type vehicle, comprising:
a body frame;
an engine which generates driving force to be transmitted to a wheel and is attached to the body frame;
a seat on which a rider sits; and
an article storage unit which accommodates an article;
wherein
the body frame is disposed between the engine and the seat in the side view of the straddle-type vehicle, and
at least a part of the article storage unit is disposed between the engine and the seat in the side view of the straddle-type vehicle.

2. The straddle-type vehicle according to claim 1, further comprising:
a fuel tank which stores fuel to be supplied to the engine,
wherein
the seat extends in the front-rear direction of the straddle-type vehicle, and
the article storage unit and the fuel tank are disposed between the front end of the seat and the rear end of the seat in the side view of the straddle-type vehicle.

3. The straddle-type vehicle according to claim 2, wherein:
the seat has a slope inclined downward toward the rear of the straddle-type vehicle;
the article storage unit is disposed below the slope; and
the fuel tank is disposed behind the article storage unit.

4. The straddle-type vehicle according to claim 3, wherein:
the fuel tank has an oil supply port unit through which the fuel is supplied, and a sub tank having a smaller capacity than that of the fuel tank; and
the oil supply port unit is provided on the sub tank.

5. The straddle-type vehicle according to claim 4, wherein the oil supply port unit is provided before the article storage unit.

6. The straddle-type vehicle according to claim 1, wherein:
the body frame is disposed at a position shifted toward the outside from the center line of the straddle-type vehicle in the vehicle width direction; and
the article storage unit extends toward the side of the body frame in the area opposite to the area where the body frame is disposed with respect to the center line.

7. The straddle-type vehicle according to claim 1, wherein:
the body frame has an upper sub frame extending in the front-rear direction of the straddle-type vehicle, and a lower sub frame disposed below the upper sub frame and extending in the front-rear direction of the straddle-type vehicle; and
the upper sub frame is disposed between the engine and the seat in the side view for the straddle-type vehicle.

8. The straddle-type vehicle according to claim 1, wherein the article storage unit has a space sufficient for accommodating at least a helmet of a rider.

## Amended claims

### Amended claims under Art. 19.1 PCT

1. [Amended] A straddle-type vehicle, comprising:
a body frame;
an engine which generates driving force to be transmitted to a wheel and is attached to the body frame;
a seat on which a rider sits; and
an article storage unit which accommodates an article;
wherein
the body frame is disposed between the engine and the seat in the side view of the straddle-type vehicle,
the body frame has a front frame which extends in the downward direction of the straddle-type vehicle from a steering head pipe, and a rear frame which extends from the front frame toward the rear wheel of the straddle-type vehicle,
the engine is attached to the lower side of the rear frame, and
at least a part of the article storage unit is disposed between the engine and the seat in the side view of the straddle-type vehicle.

2. The straddle-type vehicle according to claim 1, further comprising:
a fuel tank which stores fuel to be supplied to the engine,
wherein
the seat extends in the front-rear direction of the straddle-type vehicle, and
the article storage unit and the fuel tank are disposed between the front end of the seat and the rear end of the seat in the side view of the straddle-type vehicle.

3. The straddle-type vehicle according to claim 2, wherein:
the seat has a slope inclined downward toward the rear of the straddle-type vehicle;
the article storage unit is disposed below the slope; and
the fuel tank is disposed behind the article storage unit.

4. The straddle-type vehicle according to claim 3, wherein:
the fuel tank has an oil supply port unit through which the fuel is supplied, and a sub tank having a smaller capacity than that of the fuel tank; and
the oil supply port unit is provided on the sub tank.

5. The straddle-type vehicle according to claim 4, wherein the oil supply port unit is provided in front of the article storage unit.

6. The straddle-type vehicle according to claim 1, wherein:
the body frame is disposed at a position shifted toward the outside from the center line of the straddle-type vehicle in the vehicle width direction; and
the article storage unit extends toward the side of the body frame in the area opposite to the area where the body frame is disposed with respect to the center line.

7. The straddle-type vehicle according to claim 1, wherein:
the body frame has an upper sub frame extending in the front-rear direction of the straddle-type vehicle, and a lower sub frame disposed below the upper sub frame and extending in the front-rear direction of the straddle-type vehicle; and
the upper sub frame is disposed between the engine and the seat in the side view for the straddle-type vehicle.

8. The straddle-type vehicle according to claim 1, wherein the article storage unit has a space sufficient for accommodating at least a helmet of a rider.
